# EUROPEAN PATENT SPECIFICATION

(11) **EP 0 588 952 B1**
(45) Date of publication and mention of the grant of the patent: **01.09.1999**
(21) Application number: 92913972.3
(22) Date of filing: 21.05.1992
(51) Int. Cl.: H01J 49/00

(54) **METHOD AND APPARATUS FOR IMPROVING ELECTROSPRAY IONIZATION OF SOLUTE SPECIES**
Verfahren und Apparat zur Verbesserung der Sprühionisation von gelösten Stoffen
PROCEDE ET APPAREIL PERMETTANT D'AMELIORER L'IONISATION PAR ELECTROVAPORISATION D'ESPECES DE SOLUTES

(30) Priority: 21.05.1991 US 703506
(43) Date of publication of application: 30.03.1994
(73) Proprietor: ANALYTICA OF BRANFORD, INC., Branford, CT 06405 (US)
(72) Inventor: WHITEHOUSE, Craig, M., Branford, CT 06405 (US); FENN, John, B., Branford, CT 06405 (US); SHEN, Shida, Durham, CT 06422 (US); SMITH, Cawthon, South Norwalk, CT 06854 (US)
(74) Representative: Hackett, Sean James
(86) International application number: PCT/US92/04385
(87) International publication number: WO 92/21138

(56) References cited:
- GB-A- 2 115 604
- US-A- 4 531 056
- US-A- 4 542 293
- US-A- 4 842 701
- US-A- 4 861 988

## Description

### BACKGROUND OF INVENTION

Mass spectrometers generally embody two primary components, an ion source that transforms species to be analyzed into ions in vacuum, and a mass analyzer that "weighs" these ions by measuring the response of their trajectories to some combination of electric and magnetic fields. For many years after their introduction, the use of such mass spectrometers was limited to species that were sufficiently volatile to be vaporized so that their dispersed molecules could be ionized by gas phase encounters with electrons, photons, other ions or electronically excited atoms. Non-volatile species could not be turned into ions by such gas phase encounters and therefore could not be individually weighed by ion mass analyzers. Thus, a long standing challenge in chemical analysis has been to extend the powers of mass spectrometric analysis to species that were so large and/or fragile that they could not be vaporized without substantial, even catastrophic, decomposition. In response to this need a number of methods have been developed in the past decade or two that are remarkably capable of transforming intact molecules of complex and fragile non-volatile species from a condensed phase into ions in vacuum ready for mass analysis. Among the most powerful and popular of these "soft" techniques is so called "Electrospray (ES) Ionization." It has been described at length in several US patents (Labowsky et. al., 4,531,056; Yamashita et. al., 4,542,293; Henion et. al., 4,861,988, and Smith et. al., 4,842,701 and 4,885,706) and recent review articles [Fenn et. al., Science 246, 64 (1989); Fenn et. al., Mass spectrometry reviews 6, 37 (1990); Smith et. al., Analytical Chemistry 2, 882 (1990)]. To put the present invention in an perspective it will be appropriate to provide the following brief description of the method.

ES ionization as now practiced generally consists in flowing sample liquid comprising analytical species in a volatile solvent, at a rate typically between 1 and 20 microliters per minute, through a small metal capillary tube into a chamber containing bath gas at or near atmospheric pressure. An electrostatic potential difference of several kilovolts between the needle and the walls of the surrounding chamber produces an electric field at the needle tip that disperses the emerging liquid into a fine spray of charged droplets. Driven by the field toward the end wall of the chamber the droplets shrink by evaporation of solvent and, by a mechanism not yet clearly understood, produce free ions of the solute species in the ambient bath gas. Some of these ions become entrained in a small flow of bath gas through an aperture in the end wall leading into a vacuum system containing a mass analyzer. A most attractive feature of the ES technique is its "softness." Even the most fragile and complex species undergo little or no decomposition. Another attractive feature is that when the solute species comprise large polar molecules, for example biopolymers such as proteins, the ions produced by ES are multiply charged, roughly in proportion to their molecular weight. The result is that their mass/charge (m/z) values are usually less than 2500 or thereabouts so that they can be weighed by relatively inexpensive analyzers. Thus, ES ions of proteins with molecular weights of 130,000 have been accommodated by simple quadruple mass filters because they carry 100 or more charges. Indeed, from intact poly (ethylene oxide) oligomers with molecular weights up to 5,000,000 ES has produced ions with 4,000 or more charges!

In spite of these successes the ES technique is not without problems. Since the work of Vonnegut and Neubauer (Journal of Colloid Science 7, 616 (1952) it has been realized that stable sprays are difficult and sometimes impossible to obtain at atmospheric pressure with solutions having high electrical conductivities, especially when the solvent is mostly water. Moreover, the quality of the spray deteriorates when flow rates through a single needle exceed about 15 to 20 microliters/minute, depending upon the liquid properties. This loss of quality is reflected in poor spray stability and droplets that are too large and polydisperse in size. Another problem stems from the fact that with lower conductivity solutions the total spray current, i.e. flux of charge, is almost independent of the liquid flow rate. Consequently, increasing the flow rate decreases the charge/mass ratio in the droplets formed and, therefore, analytical sensitivity. These constraints complicate the use of ES sources with upstream sample processing such as liquid chromatography (LC) and capillary zone electrophoresis (CZE). Such separation techniques, and other sample treatments that may be desirable, have their own requirements for liquid composition so that compatibility with ES ionization can become difficult to achieve unless the ES step can be made less restrictive in its requirements.

Methods have been developed and applied that can overcome some of these difficulties. The teachings of the Henion patent mentioned above resurrect a technique tried years ago by Malcolm Dole's group [L.L. Mach et. al., Journal of Chemical Physics, 52, 4977 (1970)] and a technique used by the Fenn group from Yale University as shown in patent # 4,531,056 listed above. Dole's group passed an aspirating gas in an annular flow around the liquid emerging from the injection needle in the hope that ES performance might be improved. They found instead that ion currents decreased so they abandoned further use of the technique. The Fenn group passed an annular gas flow around the liquid emerging from the injection needle to help stabilize the Electrospray particularly in the negative ion producing mode. Nearly 20 years after Dole's work, Henion's group discovered that this "pneumatic assist" allowed them to obtain adequately stable sprays at liquid flow rates as high as 100 or so microliters/minute, higher than unassisted ES can be run with optimal performance. Although these high liquid flow rates exact a penalty in terms of decreased sensitivity, this cost is sometimes sufficiently offset by the convenience of being able to work with sample solutions at flow rates encountered in liquid chromatographic separations. It also turned out that this pneumatic assist could provide acceptable spray stability with liquids that present difficulties in unassisted ES because properties such as electrical conductivity or surface tension are outside the range of optimal performance.

Another strategy that can be used for overcoming composition problems in the liquid is the "sheath flow" technique for use with Capillary Zone Electrophoresis interfacing with Electrospray Ionization taught in the R.D. Smith patent mentioned above. It introduces a second liquid having appropriate properties in annular or sheath flow around a core flow comprising the sample liquid emerging from a dielectric tube. Rapid mixing of the sheath and core flows at the needle tip produces a liquid whose composition is such that it can give rise to a stable ES spray of acceptable quality without the need for any pneumatic assist. This sheath flow technique was extended to running higher conductivity solutions with high aqueous content used typically in liquid chromatography solutions by Whitehouse et. al. (J., proceedings of the 38th Conference on Mass Spectrometry and Allied Topics, P427, (1990)). However, the technique does not significantly extend the range of liquid flow rate.

Even though these approaches have substantially expanded the range of composition and flow rates in liquids, each has compromises in convenience or sensitivity or range of operation. The present invention provides another approach to the sprayability problem that seems to overcome many if not most of the difficulties encountered the techniques of the prior art. Our experimental studies of electrospray dispersion revealed that one of the possible reasons for the difficulties in spraying liquids with high conductivity was that such liquids show an enhanced stability against break up into droplets. Microscopic examination of the tip region of a small tube at a potential of several kilovolts relative to nearby surfaces shows that the meniscus of the emerging liquid assumes a shape approximately that predicted by G. I. Taylor (Proceedings of the Royal Society A313, 453 (1969)) and since known as a "Taylor Cone." Emerging from the tip of this cone is a small filament or jet of liquid that breaks up into tiny droplets within a few jet diameters when the liquid is well-behaved in the sense that it forms a stable spray. When the liquid is highly conductive it does not break up as rapidly. Indeed with the right combinations of voltage and flow rate we could make the jet persist for a distance of over ten centimeters. One possible explanation for this somewhat surprising behavior emerges from a consideration of what happens when the surface of a jet is perturbed by undulations. Rayleigh showed long ago (Proceedings of the Roy. Soc., 29, P.71, (1879)) that if the amplitude of such "varicose" waves exceeds a critical value determined by the properties of the liquid, the waves are amplified by surface tension forces until the jet breaks up into droplets. Indeed such surface wave growth is the generally accepted explanation for the widely practiced nebulization of liquids by ejecting them from an orifice or nozzle as a high velocity stream or jet. When the jet is formed from a highly conductive liquid whose surface is charged, it is to be expected that the effective mobility of surface charge will also be high so that the surface potential, due to the surface charge, should at all times have the same value everywhere on the surface. On the other hand, the local electric field associated with such surface potential increases wherever the radius of curvature of the jet surface may decrease. This local increase in electric field decreases the effective value of the local surface tension, thus, damping the growth of the surface waves and inhibiting the break up of the jet into droplets. This picture accounts for the difficulties encountered in the ES nebulization of highly conductive liquids by purely electrostatic forces. It also suggests that these difficulties might be overcome by somehow providing surface perturbations sufficiently strong to overcome the stabilizing effect of the surface tension. We believe that the role of the gas flow in pneumatically assisted ES is to provide just such perturbations. The present invention is based on our discovery that mechanical vibrations provide a particularly effective and convenient source of the needed perturbations. Aqueous solutions with high conductivity can easily be sprayed with this invention when used in conjunction with Electrospray ionization. Ion production performance and subsequent analysis using mass spectrometry is not compromised with solution liquid flow rates even over 100 ul/min.

### BRIEF DESCRIPTION OF THE DRAWINGS

FIG. 1 is a schematic representation of an Electrospray interfaced to a Mass Spectrometer which incorporates one embodiment of the invention.

FIG. 2 shows a cutaway drawing of an assembly in which an electrospray liquid introduction needle is vibrated by a tuned horn energized by a transducer.

FIG. 3 shows a section view of the embodiment given in FIG. 2.

FIG. 4 shows details of the tip of the injection needle assembly of Fig. 3 comprising three concentric tubes.

FIG. 5 shows a cutaway drawing of the tuned horn assembly without its housing.

FIG. 6 shows a detail of the liquid exit end piece in which the needle tip is press-fitted or bonded into the removable horn end piece.

FIG. 7 shows another embodiment of the horn exit end and liquid introduction tube in which the needle tip is connected to the horn end piece by the use of a ferrule and nut arrangement.

FIG. 8 shows another embodiment of the exit end of the tuned horn in which the horn end piece terminates in a collet and the orifice tip is connected to the horn end with a nut tightened on the collet.

FIG. 9 shows another embodiment of the horn exit in which the tip is threaded directly into the horn.

FIG. 10 shows some details of another embodiment of the invention in which the liquid introduction needle is bonded directly to a cantilever vibrating transducer element.

FIG. 11 shows the liquid introduction needle bonded directly to a beam mounted vibrating transducer element.

FIG. 12 shows an embodiment of the invention in which the transducer oscillations are coupled directly through the liquid to the needle tip.

FIG. 13 shows a detail of the membrane area isolating the sample solution in the embodiment of FIG. 12.

FIG. 14 shows a flow diagram for system comprising a vibrationally assisted electrospray ion source interfaced to a mass spectrometer and a separation or sample reactor system as a source of sample liquid. Also shown is an ion mobility analyzer as an alternative to the mass spectrometer analyzer.

FIG. 15 shows the results of practicing the invention on a solution of Cytochrome C in 1.0 % TFA/water infused through the liquid introduction needle into the Electrospray ion source.

### BRIEF DESCRIPTION OF THE INVENTION

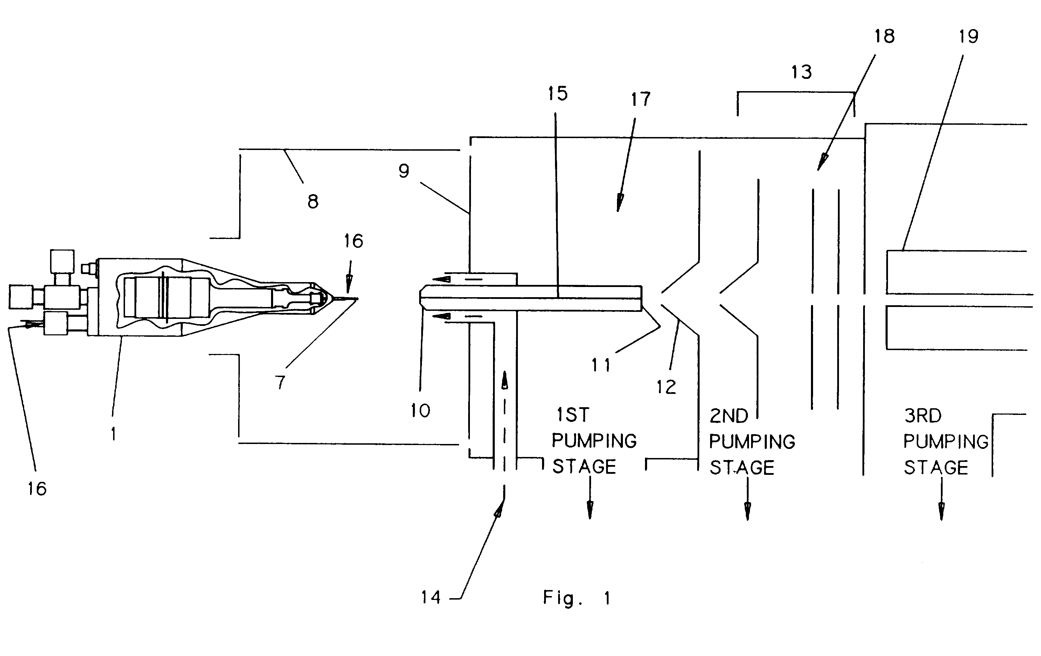

Figure 1 shows a schematic representation of an apparatus that embodies the essential features of a typical Electrospray Ion Source interfaced with a quadrupole mass spectrometer. Sample solution at flow rates usually between 1 and 100 ul/min enters the ES chamber through a stainless steel hypodermic needle at ground potential. Typical values of applied voltages for positive ion production are in parenthesis after each of the following components: needle **7** (ground), surrounding cylindrical electrode **8** (-3,000 V), end plate **9** (-4,000 V) metalized inlet **10** (-5,000 V) and exit **11** (+5 to 400) ends of the glass capillary, skimmer **12** (+10), and ion focusing lens **13** voltages ranging from +/- 200 volts. To produce negative ions similar voltages of opposite polarity are applied. In addition, during negative ion production, it is useful to introduce a stream of oxygen or other electron scavenger **16** near the needle tip in order to inhibit the onset of a corona discharge which occurs at lower voltages in the negative polarity mode.

At first glance the indicated potential difference of 5,010 V between the inlet and exit ends of the capillary may seem startling. We have found that with the carrier bath-gas **14** (usually nitrogen) at about 1 atmosphere the ion mobility is low enough so that the gas flow through the capillary inlet and raises the ions back up to ground potential or as much as 15KV above it. Thus, we can readily provide the energies necessary for injection into a magnetic sector mass analyzer. With this configuration, the sample injection line along with all other external parts of the apparatus are at ground potential and pose no hazard to the operator. Of course, one can replace the glass capillary arrangement with a simple orifice but the ions would not be able to climb electrostatic fields in the free jet. Then the potential of the liquid introduction needle **7** must be raised to a value sufficiently high (usually several kilovolts) to provide the field at the needle tip necessary to disperse the liquid. Because the sample liquid is generally an electric conductor one must also maintain its source at the same potential as the needle, or else provide a power supply with enough capacity to provide the current that flows to ground while maintaining the needle at the desired potential.

The field at the needle tip **7** charges the surface of the emerging liquid which then becomes dispersed by Coulomb forces into a fine spray of charged droplets. Driven by the electric field, the droplets migrate toward the inlet end **10** of the capillary through a counter-current flow **14** of bath gas. As they rapidly evaporate in route, the resulting solvent vapor along with any other uncharged material is swept away from the capillary inlet by the bath gas flow. Meanwhile, in accordance with the scenario described earlier, the rapid evaporation of the migrating droplets promotes the sequence of Coulomb explosions that culminates in the production of droplets small enough to produce solute ions. The ions are entrained in a portion of the bath gas that sweeps through the capillary orifice **15** and enter the first vacuum pumping stage **17** via a free jet expansion. A core portion of this free jet passes through a skimmer **12** into a second vacuum chamber **18**, delivering ions to the analyzer. In Fig. 1 the analyzer **19** is a quadruple mass spectrometer filter but almost any other kind of analyzer can be used. Also any number of pumping stages can be used between the atmospheric pressure electrospray chamber and the analyzer chamber.

As mentioned earlier, it becomes difficult to maintain a stable spray when the electrical conductivity, surface tension, or flow rate of the liquid are too high. The present invention overcomes these problems to a substantial extent by providing mechanical vibration strong enough to cause perturbation and even nebulization of the liquid flow. We have found that this vibrational perturbation can be applied directly to the liquid or to the liquid introduction tube tip which then transmits it to the liquid.

Mechanical vibration, particularly in the ultrasonic frequency range, has been used for nebulizing fluids and for breaking up liquid streams into droplets in a controlled manner as known in the arts. The design and use of tuned horns for sonically disrupting cells in solution is explained in patents 3,328,610 and 3,524,085. The tapered shaping of the horn amplifies the transducer longitudinal movement at the horn tip thus transmitting enough power to cause cavitation when the vibrating horn tip is emersed into liquid. If a hole is drilled into and through the horn tip, this same ultrasonically tuned horn can be used as a nebulizing nozzle for liquid exiting from the tip orifice. Such nozzles are commercially available with operating frequencies up to 120 KHZ. The ink jet printing industry has made use of imposing ultrasonic vibrations both directly to the liquid and to nozzles through which the liquid passes to create a controlled stream of droplets from an orifice tip as described in patents 3,596,275 and 3,298,030 and a review of the technology by Heinzl et. al. (Advances in Electronics and Electron Physics, Vol. 65, P.91, Academic Press, 1985).

Charge has been deposited on the emerging liquid droplets from an ink jet nozzle by use of a counter electrode. Charging of the droplets allows dispersion of the ink or electrostatically steering of the droplets when forming a printed dot pattern.
Ultrasonic mechanical vibration techniques are also used to nebulize liquid in commercial ultrasonic humidifiers and in Inductively Coupled Plasma (ICP) ion sources like those described by Clifford et. al. (Anal. Chem., vol. 62, P.2745, 1990) for use with mass spectrometry. In these applications neutral liquid droplets are produced by nebulization from direct contact with the ultrasonically vibrating transducer. Dropping liquid on the surface of a tuned horn has also been used to produce neutral liquid droplets used in particle beam sources for mass spectrometry as reported by Ligon et. al. (Anal. Chem., Vol. 62, P. 2573, 1990). Each of these applications involved a particular embodiment of the principle of atomizing a liquid by means of vibration but none of those embodiments meet the needs of an Electrospray ion source to be used for mass spectrometric analysis.

Several requirements must be satisfied if mechanical vibration and the ES process are to be combined for mass spectrometric analysis, many of which are not provided for in the prior art. These requirements include the ability to produce very small, very highly charged droplets of uniform size by the presence of an intense electrostatic field at the point of droplet formation, the ability to accommodate a wide range of liquid flow rates and solution properties such as composition, viscosity, surface tension and electrical conductivity, liquid channels with minimal dead volume but flow areas of sufficient size to prevent plugging, long term stability of operation over a wide range of operating conditions, easily replaceable components such as injection needle tips and the ability to provide sheath flows of various liquids around a core flow of sample solution fluids.

When mechanical vibration is used to destabilize or nebulize the liquid flow in an ES source, the point of droplet formation should be located at the point of highest field gradient imposed by the applied voltages to a needle tip. The high field gradient insures maximum droplet charging which is necessary to produce maximum current of analyte into the mass analyzer. The needle tip from which the liquid is emerging must be relatively sharp to insure a high field gradient at that point. The high field gradient at the electrospray tip draws the emerging liquid into a Taylor cone with liquid issuing from the tip as a fine filament or jet. Because the diameter of this jet is much less than the orifice size through which liquid is injected unassisted electrospray can produce liquid droplets smaller than can be obtained from a jet issuing directly from that orifice. The distribution of droplet sizes produced by an ideal unassisted ES is very monodisperse and the droplets can be as small as 1 or 2 um in diameter. If any kind of nebulizing assistance is to be provided, the combination should retain the ability to produce a uniform droplet size distribution with droplet diameters well below 10 um. Larger droplets will produce ions but with less efficiency and abundance. The droplets generated by mechanical vibration as in ultrasonic disruption or nebulization of liquid emerging from a nozzle or tube can have an extremely uniform, size distribution much more so than in the case of pheumatic methods. We have found that the more uniform droplet size distributions obtained with vibrationally assisted ES give rise to better consistency and analytical sensitivity in ion production for mass spectrometry than do the broader droplet size distribution obtained with pneumatic assistance. The mechanically vibrated inkjet printer configuration cited above (patents 3,298,030 and 3,596,275) can also eject charged droplets from its nozzle tip but such droplets have diameters roughly the same as the nozzle orifice. Due to plugging problems with orifices smaller than 10 um or so, the techniques used in ink jet printing are not practical for the production of droplets in the size range required for efficient ion production in the mass spectrometric analysis of solutions. Moreover, liquid flow rates that MS ion sources must handle can range from 0.25 ul/min to over 200 ul/min. A single small orifice diameter would not be effective over such a wide range of flow rates.

In the tuned resonating horn approach to vibrationally assisted ES sufficient power applied to the transducer provides enough mechanical displacement at the tip to nebulize the liquid even in the absence of any electrostatic field. Droplet sizes produced by such nebulization depend on the frequency of vibration, the higher the frequency the smaller the droplet size. The present invention combines mechanical vibration, with electric fields in such a way that droplets much smaller than the orifice through which liquid is introduced. Thus by practicing the invention one can use orifices sizes 100 um or larger in diameter to produce charged droplets of uniform size with diameters much smaller than the orifice diameter with sufficient vibrational power applied in conjunction to assist the electrostatic field. The practice of the invention can produce highly charged droplets with a uniform size distribution, almost regardless of the flow rate or properties of the liquid. The diameter of those droplets is inversely proportional to the frequency of vibration.

One embodiment of the present invention uses a tuned horn to transmit the transducer vibration to the horn tip. The liquid introduction tube is integrated into the horn tip assembly thus becoming part of the resonant structure. To avoid plugging during running, the bore of this tube is conveniently 100 um or larger in diameter but smaller bores may be used in practicing the invention. To minimize dead volume, this bore diameter can extend from the tip all the way to the sample source. Tuned horns with small bores of such length cannot readily be fabricated, e.g. by drilling a small hole through the horn itself. In the present invention a liquid introduction tube of desired bore is incorporated into a removable segment of a tuned horn having a relatively large channel through it. This arrangement means that the electrospray needle tip is economically, conveniently replaceable. The outer diameter of the tube tip is small enough to provide the high field necessary for ES dispersion of the liquid with or without assistance by mechanical vibration. The tube material is typically stainless steel for compatibility with many types of solutions but other materials with appropriate acoustical properties can be used. When sheath flows are to be introduced around the sample liquid flow, the sample introduction tube can be located inside the bore of the tube that is mechanically vibrated. In this embodiment, the sample introduction tube can be made from virtually any material such as the fused silica widely used in capillary zone electrophoresis and liquid chromatography techniques.

For practical purposes, the sharp Electrospray tip must be readily replaceable. Embodiments of the invention with replaceable needle tips that allow the transmission of mechanical vibration to the tip and provide a convenient means for connecting one or more liquid flow lines are detailed in later sections. A layered liquid flow embodiment is shown in which two liquids can be introduced in annular flow at the needle tip without affecting the coupling of mechanical vibration assistance to the ES dispersion of the liquid. This "layered flow" is convenient when the primary sample flow is less than 0.25 ul/min and additional flow volume is needed for satisfactory dispersion. A second layer of liquid flow can also be used to mix another solution with the primary sample flow. Such mixing sometimes enhances the ion signal that can be obtained. The solution mixing can also be used to ensure an electrical contact from the sample flow to the metal second layer tube. Provision can also be made for an annular flow of gas directed along the spray axis through a third concentric tube layer at the needle tip. This gas flow can be used in conjunction with the mechanically assisted electrospray, for example, when oxygen is introduced to suppress corona during negative ionization.

When vibration assistance to ES dispersion is to be used for generating ions for mass spectrometric analysis, it may be desirable to provide a countercurrent flow of drying gas at temperatures up to 100 degrees centigrade or more. The present invention allows for stable long term operation under these temperature conditions. In one embodiment an additional gas flow is introduced so as to flow through the gap between the horn and its outer housing exiting in the same direction as the liquid flow near the needle tip in the layered flow configuration. A housing surrounding the tuned horn is configured such that the gas flow exiting at the needle tip first flows over the tuned horn which effectively warms the gas from the heat generated by the transducers and horn. The gas in turn supplies some measure of cooling to the mechanical vibration horn.

According to the present invention, there is provided an apparatus and a method for the production of ions from a liquid sample for analysis of said ions as defined in claim 1 and 32 respectively.

Preferred embodiments of the present invention are set out in dependent claims 2 to 31.

### DETAILED DESCRIPTION OF THE INVENTION

The essential features of the present invention set forth above include a combination of mechanical vibration with intense electric fields to produce highly charged droplets as a source of ions. A more detailed description is provided in the following sections.

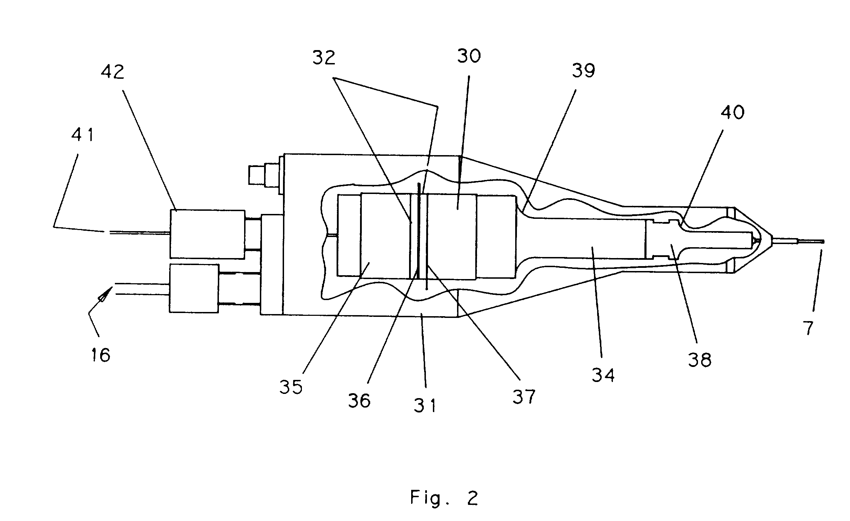

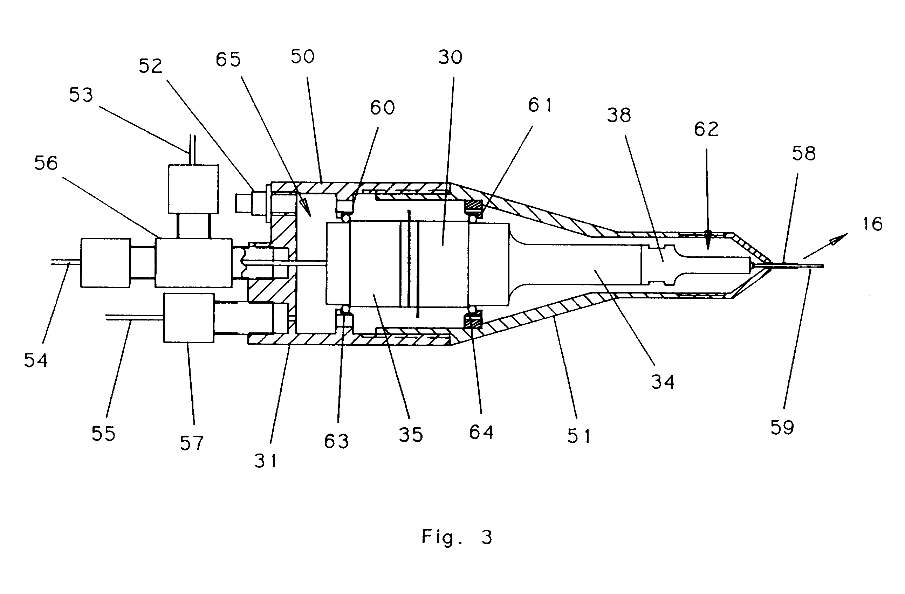

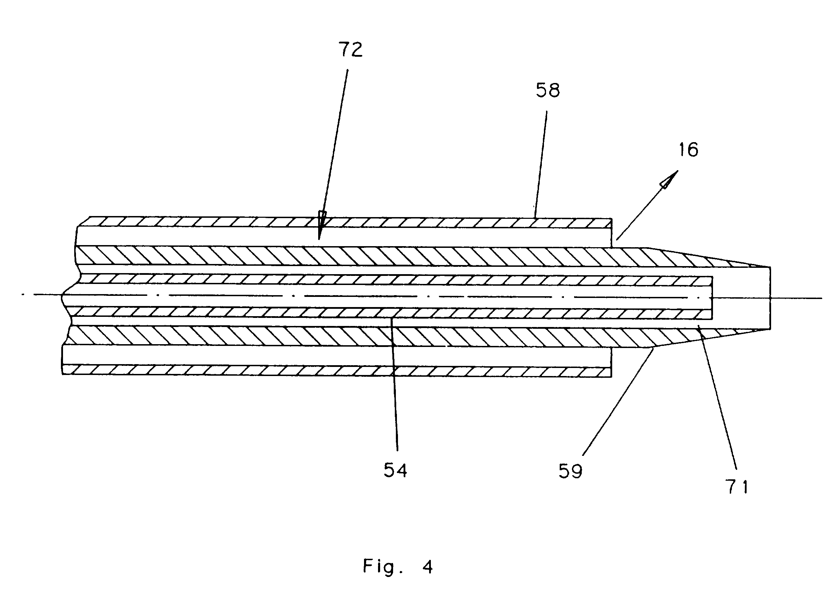

Shown in FIG 1 is one embodiment of the invention in which a transducer driven tuned horn is used to vibrate an ES liquid injection needle assembly **1** that is incorporated in an ES ion source for use with a mass spectrometer. Details of this tuned horn assembly 1 are shown in the cutaway drawing of FIG. 2 and the section drawing of FIG. 3. As shown in FIGS. 2 and 3, the tuned horn **30** is mounted inside outer case **31**. Piezo crystals **32** with electrical contacts **36** and **37** are sandwiched between a front horn section **34** and a rear section **35**. An oscillating voltage is applied across leads **36** and **37** causing the crystals to expand and contract primarily in the horn's longitudinal direction. The longitudinal expansion and contraction of the crystals is transmitted through the horn front section **34** and the removable horn tip **38** into liquid introduction tube and electrospray needle **7**. The stepdown in diameter at points **39** and **40** of the front horn section **34** cause an amplification in the piezo electric transducer's longitudinal vibration movement at the electrospray needle tip **7**. FIG. 2 shows a two fluid embodiment of the invention that provides a sheath flow layer of a second fluid around a core flow of sample liquid. FIG. 3 shows a three fluid embodiment with two sheath flow layers. Tip details for this configuration are shown in FIG. 4.

In the two fluid embodiment, sample solution enters the injection needle entrance at **41** and travels through to the needle tip **7**. Mechanical vibration from the piezo elements **32** is transmitted through the tuned horn to the tip of needle **7**. The combination of nebulization or liquid stream disruption and electrostatic potentials applied at the needle tip causes the formation of charged droplets with a fairly uniform droplet diameter distribution. The frequency applied to the crystals is generally that which will match the resonant mechanical frequency to which the horn is mechanically tuned. When sufficient power is applied the diameter of the droplets created at the horn tip depends on the frequency and power applied with droplet size decreasing with increasing frequency. Increasing power to the crystal at the resonant condition will increase the longitudinal displacement at the needle tip. The oscillating voltage applied to the transducer can be varied to provide the power needed for optimum performance over a wide range of flow rates. Power requirements generally increase with increasing liquid flow rates.

In the embodiment of FIG 3. , the case or housing **31** surrounding the tuned horn consists of two halves **50** and **51**. The rear half **50** supports the feedthroughs for the electrical leads to the piezo crystal **52**, the liquid introduction tubes **53** and **54** fitting **56**, and fitting **57**, for the gas inlet tube **55**. The front half of the case **51** forms a conduit for the concentric needle gas flow **16** entering through tube **55** and exiting along the electrospray needle tip through the annulus formed by tubes **58** and **59**. During operation, when gas flows through concentric needle **58** the gas enters through tube **55** feeding through fitting **57** into the gap **65** between the horn assembly **30** and the case **31**. The gas flows through holes **60** and **61** and into annulus **62**. Gas flow through the annular gap between stationary tube **58** and vibrating needle tip **59** exits at the droplet formation area flowing in the direction of the charged liquid droplet movement. The case **31**, when assembled, is supported by and held off the horn by two elastic rings **63** and **64** which also serve to reduce contact between the horn and the case. These rings maintain tube **58** concentric with but not touching tube **59** during operation. The gas flowing through the horn and case assembly serves the secondary function of helping to remove heat generated by the piezo transducers and horn during operation.

FIG. 4 illustrates the needle tip arrangement where three fluids are used. Sample introduction tube **54**, which may comprise a column for separation by Electrophoresis or Liquid Chromatography, lies inside vibrating tube **59** with its exit plane adjustable relative to the exit plane of tube **54**. In FIG. 4 the exit plane **54** is shown upstream of tube exit **59**. However, in some applications, it may protrude outside the exit plane of tube **59**. Tube **58** is a conduit for introducing a third fluid flow **16** through annular space **72**. Liquid is introduced through tube **53** which leads through fitting **56** into annulu space **71** between tube **54** and vibrating tube **59**. The flowing liquid in annulus **71** mixes with or forms a layer on fluid exiting from a tube **54**. The liquid flowing in annulus **71** may also serve to establish electrical contact with the fluid leaving a tube **54** which may be of dielectric material. Gas **16** introduced through tube **55** and fitting **57** flows into the annulu space between tubes **59** and **58** for the third fluid. Placement of the exit plane of tube **58** is adjustable along the axis relative to the exit plane of tube **59**.

A two fluid system is shown in FIG 2. In that configuration tube **54** of the three fluid embodiment is removed and the entrance for tube **59** becomes **41**. The bore of tube **59** extends from the tip through fitting **42** with little or no dead volume.

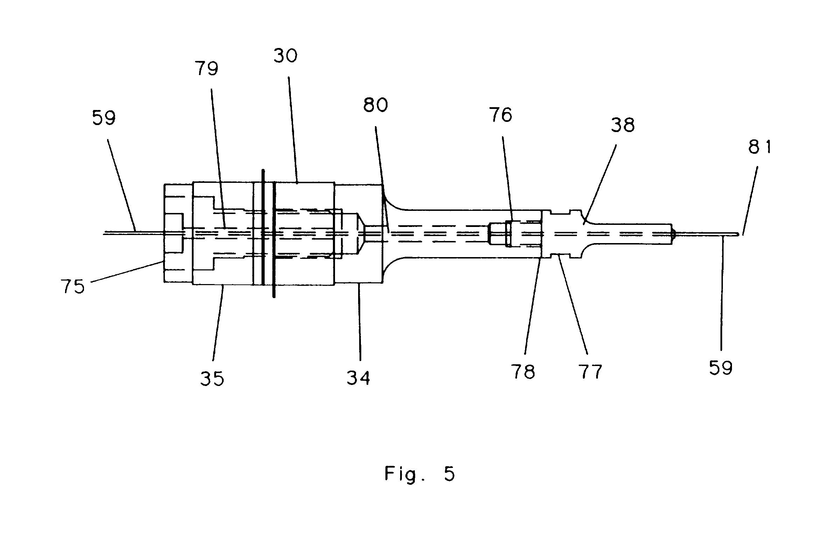

FIG. 5 shows horn assembly **30** with the case **31** removed. The front **34** and rear **35** sections of the horn form a sandwich with the transducer crystals **32**. The front **34** and rear **35** horn sections, transducer crystals **32** and contacts **36** and **37** are pressed together with bolt **75** through which is bore **79**. A removable end piece **38** of the horn is attached to its front section **34** with threaded end **76**. The mating surfaces at joint **78** allow transmission of the mechanical vibration from the horn front section **34** into the end section **38**. Flats **77** machined into end piece **38** allow simple tightening to the front horn section. The end piece is attached to tube **59** having a small bore by either a press fit or a weld. The mechanical vibration of the end piece **38** is transmitted to tube **59** through the bonded section and thence to the tip **81** causing nebulization or disruption of the exiting liquid flow. Tube **59** in FIG. 5 extends through channel **80** in the horn front section **34** and through channel **79** in bolt **75**. Tube **59** can extend an indefinite length beyond the entrance end. Possible dead volume caused by fitting connections have been reduced by passing tube **59** through the horn.

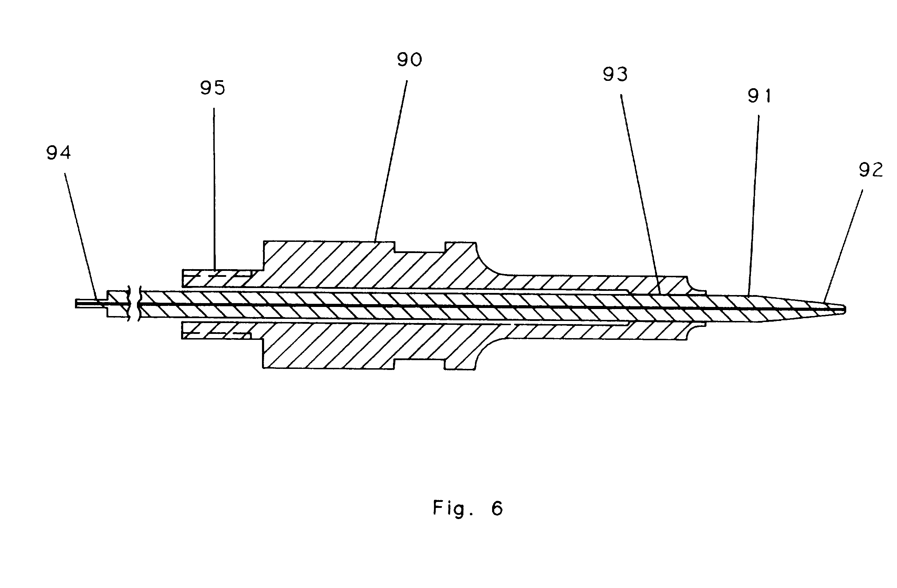

FIG. 6 shows a cross section detail of the horn end piece configuration shown in FIG. 5. Tube **91** is press fit, welded or bonded to the end piece **90** along bore **93**. Tube **91** containing a channel most suitable for a given application is shaped at the entrance end **94** to allow attachment to any size tube thus minimizing dead volume at the coupling. Tube **91** is long enough to extend through the channel in horn **30** and bolt **75**. The exit end **92** of tube **91** is shaped to maximize the ES performance when Mechanical vibrational assistance is used. Horn endpiece **90** connects to the horn front section by means of threaded portion **93**.

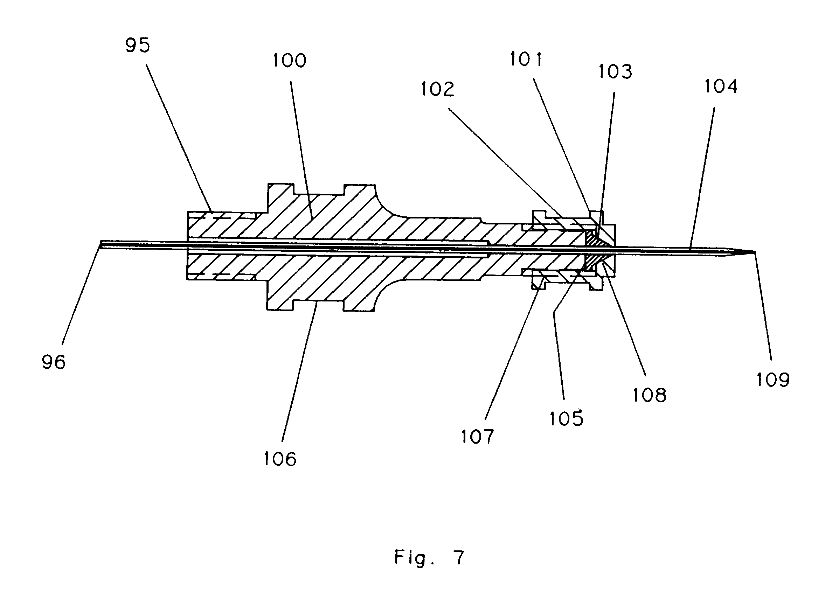

FIG. 7 shows an alternative method for attaching a tube to the horn end section so as to allow transmission of mechanical vibration. Tube **104** admits sample solution into end **96** sample introduction needle into the ES chamber at the opposit **109**. It is attached to the horn end piece **100** with a ferrule/nut combination. Ferrule **103** is tightened around needle **104** and end piece face **107** by tightening nut **102** on threaded portion **107**. The ferrule may include a longitudinal slit to facilitate compression on tube **104**. The nut has an internal taper causing a compression of ferrule **103** along surface **108** when it is tightened. Flat sections on the nut **102** and on the horn end piece **106** facilitate tightening.

Mechanical vibration is transmitted through surface **105**, ferrule **103** and tube **104** to the exit end **109** causing liquid flow dispersion or nebulization as liquid emerges into the field. The horn end piece **100** is attached to the horn front section by threaded portion **93**.

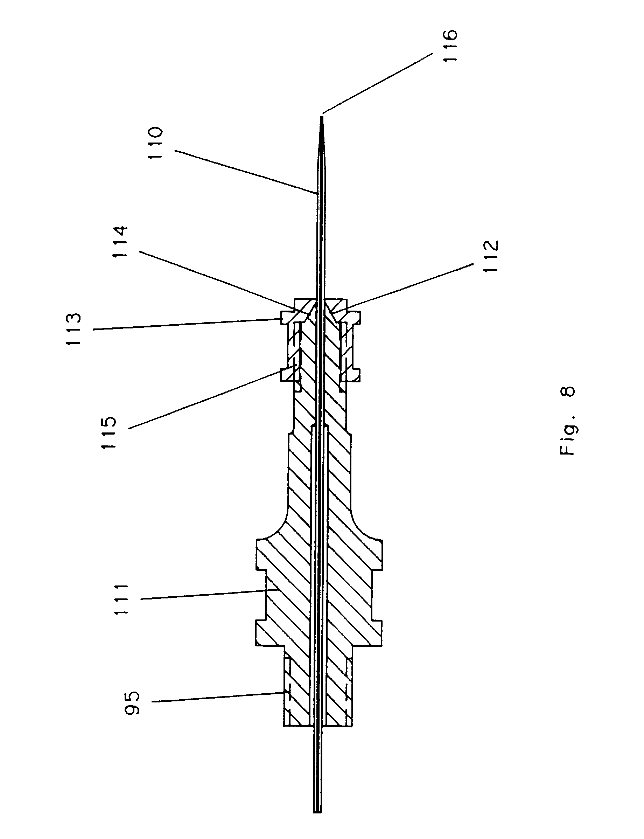

FIG. 8 shows an alternative to the ferrule arrangement of FIG. 7. A tube **110** is attached to the horn's end piece **111** by a collet section **112** included as part of the end piece. Nut **113** similar to nut **101** of FIG. 7 is tightened onto end piece **111** by threaded portion **115**. The internal taper of **114** compresses the longitudinally slit collet **112** of the end piece **111** onto tube **110**. Mechanical vibration is transmitted from the endpiece **111** and tube **110** to the exit end **116**.

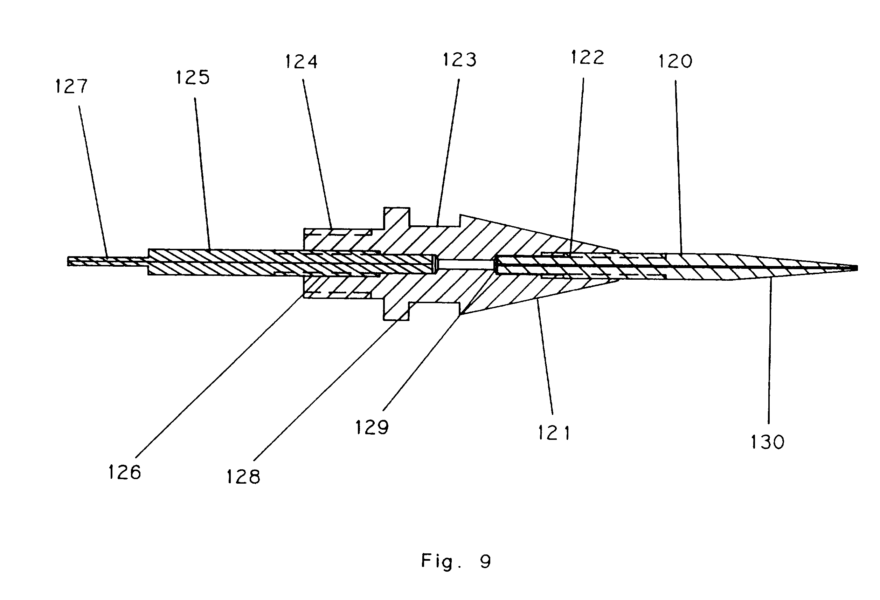

FIG. 9 shows yet another means for attaching removable tip section **120** directly to a removable horn end piece **121**. Tube **120** threads into horn endpiece **121** along threaded portion **122** bottoming on surface **129**. Channel **128** in the endpiece has a smaller bore than the outer diameter of tube **120** so as to insure a surface contact for transmitting mechanical vibration between the two elements. Tube **125** threads into end piece **121** along threaded portion **126**. The exit end **130** of tip **120** can be shaped to optimize the combination of mechanical vibration in the presence of an electric field for dispersing liquid into charged drops. Entrance end **127** of tube **125** can be shaped to accommodate a specific fitting type, thus minimizing dead volume. Removable horn section **123** attaches to the front section of the horn by using threaded section **124**. Flat faces **123** are used to grip the horn end piece while tightening.

In any of the embodiments shown in FIG. 6 through 9 the features and shapes of the removable end piece portion can alternatively be included as part of the front horn section. The horn itself can also be fashioned into the shape described for the removable tips and tube pieces and provided with small channels. This approach, however, would not be as convenient or cost effective as the use of replaceable end sections and tips.

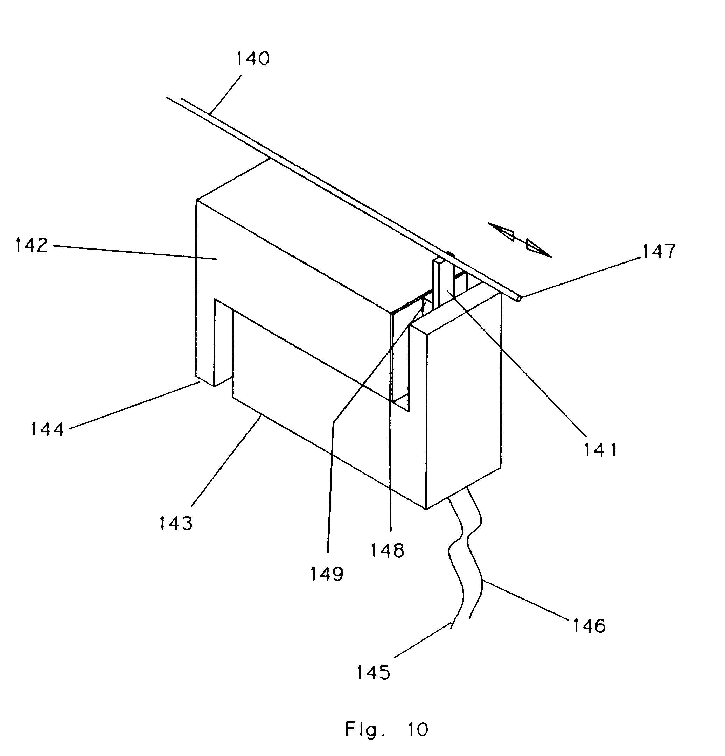

FIG. 2 through 9 show a tuned horn configuration in which mechanical vibration is transmitted from vibrating transducers through the horn body to the tip. Mechanical vibration assistance to the electrostatic field dispersion of liquid into charged droplets occurs either by disruption of the jet of fluid issuing from the Taylor cone or by directly nebulizing the liquid off the exit face of the tube. Alternative means are shown in Fig. 10 through 12 whereby the mechanical vibration is applied to the electrospray needle or is conveyed from the vibrating transducer directly into the liquid.

An alternative means for applying mechanical vibration to the ES needle is shown in FIG. 10. Liquid introduction needle **140** is attached directly to vibrating transducer element **141** that is mounted in a cantilever orientation. The transducer is held in place with a double clamp assembly **142** having front **143** and rear **144** clamp sections. These sections are held together with bolts allowing a preset holding force to be applied to the transducer faces. Insulator **148** separates electrode **149** from the clamp face that also serves as the opposing electrode. Alternating voltage is applied to the electrodes through **145** and **146** causing the transducer element **141**, and the needle tip **147** to oscillate in an axial mode. When this assembly is used in place of assembly **1** in FIG. 1, needle **140** is maintained at potentials up to a few kilovolts relative to the surrounding lenses and the capillary entrance. The needle oscillation in the presence of a strong electrostatic field enhances the formation of charged droplets from the liquid emerging from needle tip **147**.

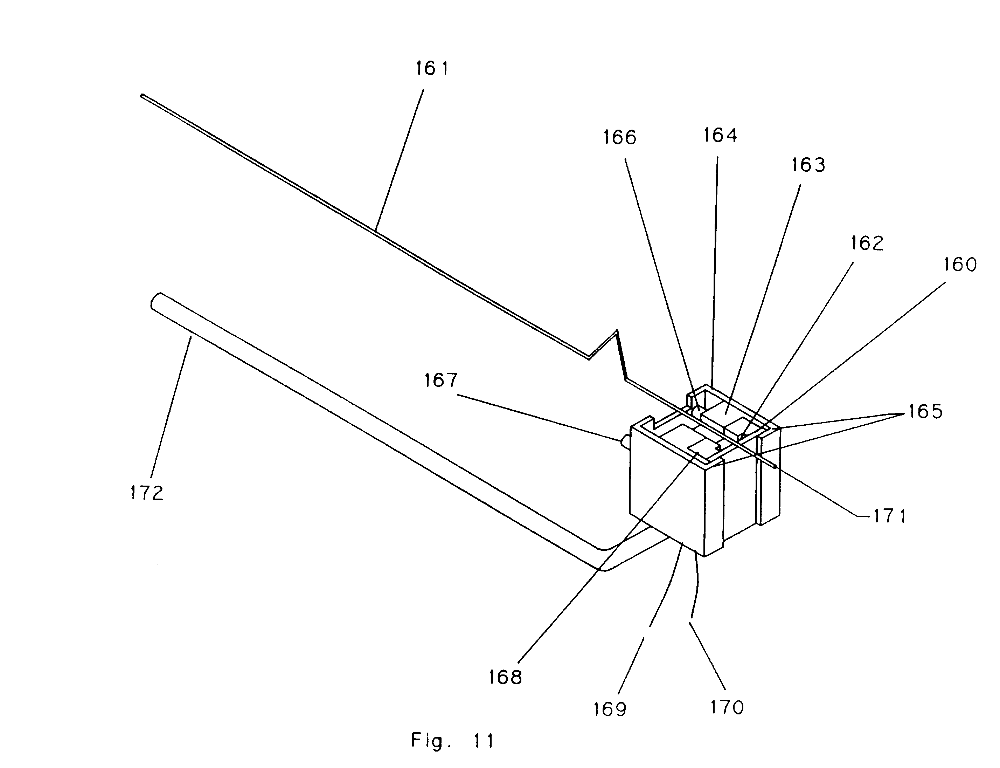

FIG. 11 shows still another embodiment of the invention. Transducer element **160** is mounted in a beam rather than a cantilever configuration. Liquid introduction needle **161** is attached at the center of the edge of the transducer element at point **162**. The transducer element is clamped at the edges with back clamp piece **163** and the edge lip **165** of front clamp **164**. Electrode **168** is sandwiched in between the back clamp **163** and the transducer **160** along opposite edges. Clamping force is applied between the front **164** and back **163** clamp pieces by bolts **166** and **167**. Lead **169** attaches to electrode **168** and lead **170** attaches to front clamp piece **164** that serves as the other electrode. In this embodiment the back clamp piece is dielectric material. Alternating voltage applied to the leads causes the transducer **160** to oscillate in a direction normal to its free surface. This oscillation in turn causes the liquid injection needle **161** and tip **171** to oscillate primarily in the axial direction. The clamp assembly is attached to rod **172** for mounting in the electrospray chamber. Kilovolt potentials are applied between the needle **161** and the electrospray chamber lenses and capillary entrance while the needle tip **171** is oscillating. This vibrationally assisted ES dispersion can produce relatively mono disperse charged droplets from the liquid leaving needle tip **171**. The beam mounted transducer shown in FIG. 11 can achieve a higher vibration frequency then can be obtained with the cantilever mounting shown in FIG. 10. However, for similar size transducer elements it results in less overall vibrational displacement at the needle tip than the cantilever arrangement. Which configuration may have an advantage for a given application depends on whether one wants more displacement or higher frequency.

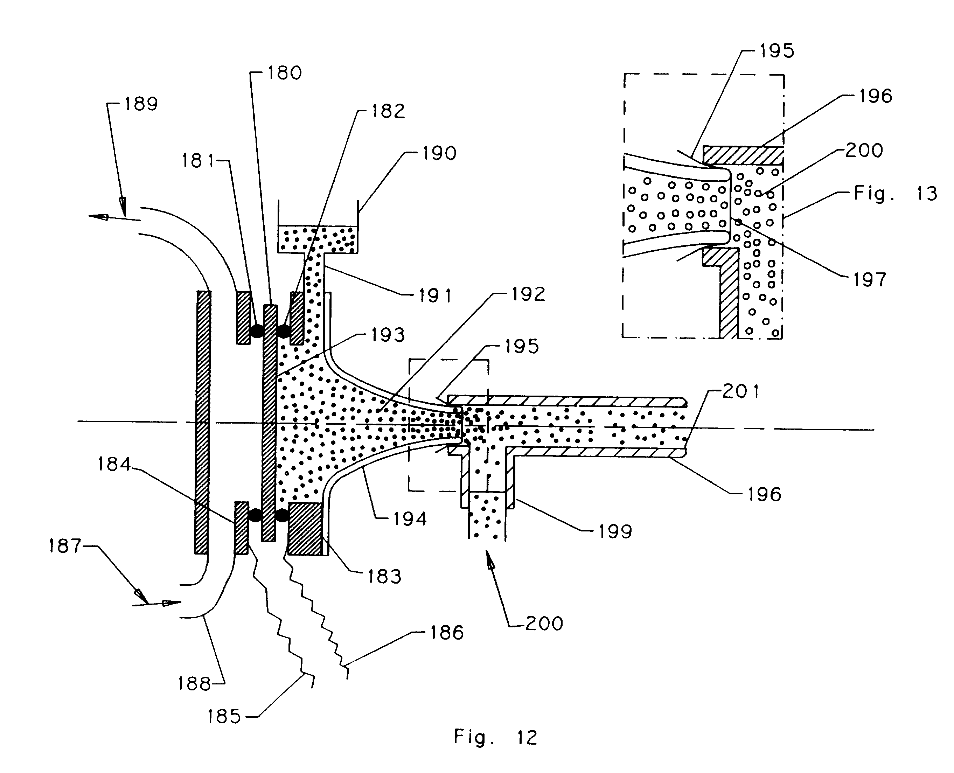

FIG. 12 illustrates an embodiment of the invention in which vibration of a transducer is applied directly to the liquid sample being introduced. Transducer **180** is held between rings **181** and **182**. The rings are clamped between the front body section **183** and rear body section **184**. Electrical leads **185** and **186** attach to opposite sides of the transducer. Alternating voltage applied across the leads causes the transducer faces to oscillate in the surface normal direction. Fluid can be introduced on the rear side of transducer **180** entering at **187** through tube **188** and exiting at **189** for cooling or damping purposes. A static fluid reservoir **190** maintains a constant pressure for fluid entering chamber **192** through conduit **191**. The fluid in chamber **192** is in direct contact with the front face **193** of transducer **180**. The vibrations imparted to the fluid in chamber **192** by oscillating crystal **180** are transmitted inside of cone **194** through diaphragm **195** into the liquid on the other size.

A detail of the membrane configuration is shown in FIG. 13. Membrane **195** covering the tip of cone **194** creates a seal with tube **196**. The oscillating membrane surface **197** imparts its vibration to the fluid in tube **196** transmitting this vibration to the sample fluid **198** in tube **196**. Sample liquid **200** entering side tee **199** flows through tube **196** to exit **201**. Vibration imparted to the fluid through the membrane assists the electric field in forming droplets at needle tip **201**. Kilovolt potentials are applied between tube **196** and the surrounding lenses and capillary entrance in the electrospray chamber. The sample fluid exiting from tube tip **201** can be electrosprayed with or without the assistance of the mechanical vibration.

The embodiments of the essential vibrational feature of the invention in FIGS. 10-12 are variations on the theme shown in FIG. 2. In each case highly charged droplets are produced by the combination of mechanical vibration with electrostatic fields and are driven by the fields in the electrospray chamber towards the entrance of the capillary channel **15** leading into vacuum. Solutions formed from the charged droplets are swept into vacuum through glass capillary tube channel **15** and transported through the vacuum pumping stages to mass analyzer **19**. The embodiments shown can also be used to create charged liquid droplets for other analytical methods such as ion mobility analysis and so-called particle beam techniques in mass spectrometry. The mechanical vibration assisted electrospray needle assembly can be used with other configurations of the ES source than is shown in Fig. 1. For example, alternative ES ion source configurations may not include countercurrent bath gas.

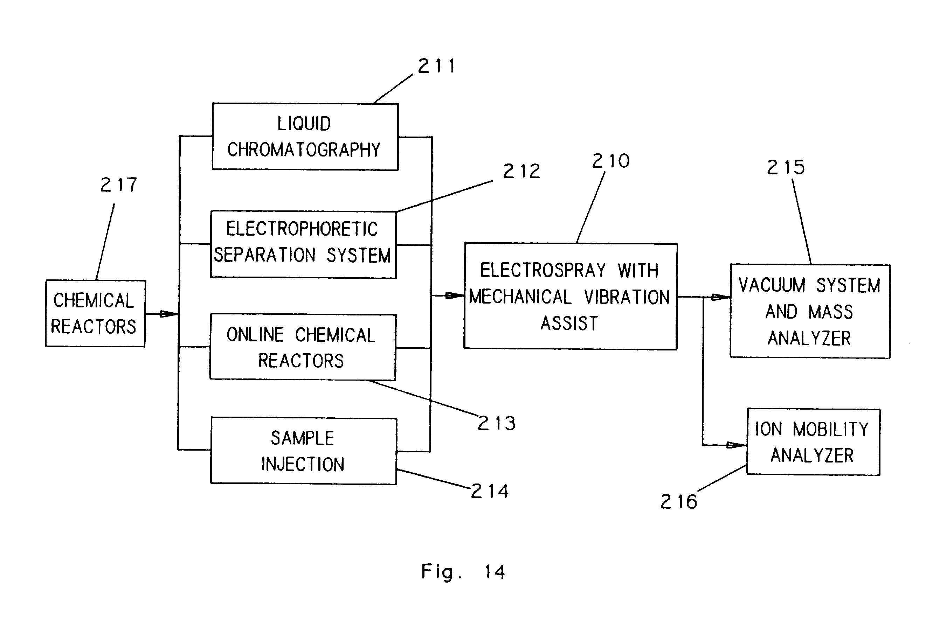

FIG. 14 shows how the invention comprising an ion source **210** based on the combination of electrostatic fields and mechanical vibration to produce charged droplets, can be used to interface an analyzer with any of several sources of sample liquid. The ion source can be interfaced with any one of several possible sample treatment or "front end" systems including a liquid chromatographs **211**, electrophoretic separation systems **212**, chemical reactors **213** and **217**, and direct sample liquid injection inlets **214**. The liquids from such sources may be analyzed in this way on an on-line or off-line basis. The analyzing means in such combination may comprise mass spectrometers **215**, ion mobility analyzers **216** and photon spectrometers. Clearly, the interfacing possibilities with the vibrationally assisted ES are numerous and not limited to those listed in FIG. 14.

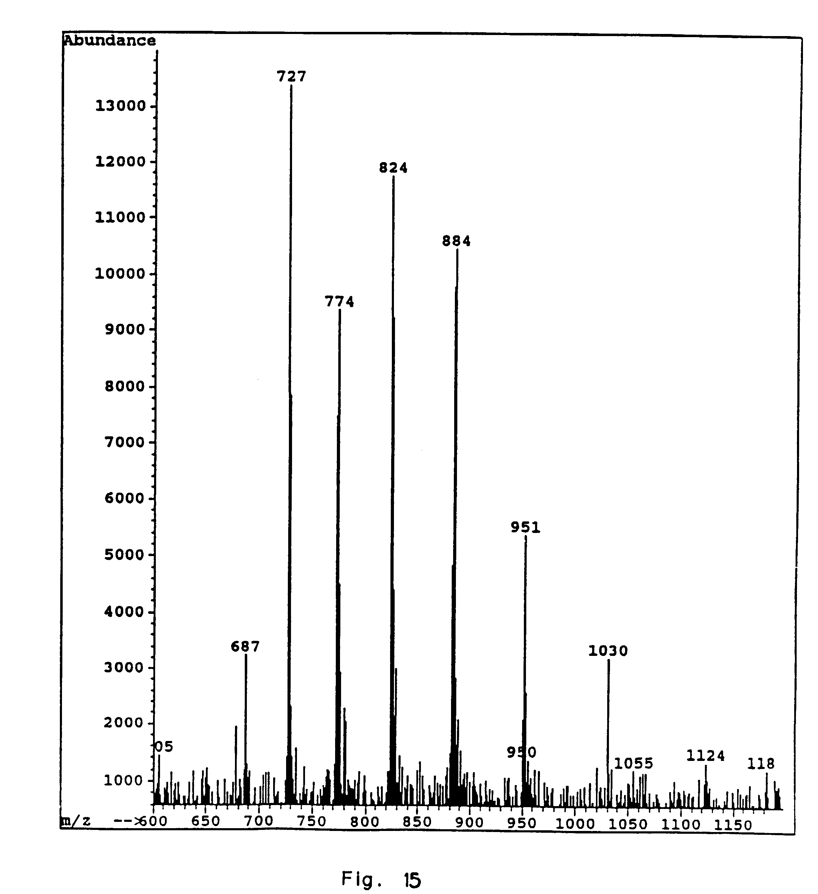

FIG. 15 shows a mass spectra obtained by practicing the invention with a solution of Cytochrome C at a concentration of 0.01 ug/ul in 1.0% Trifluoro Acetic Acid (TFA) in water. The spectra is an average of 8 scans of 9 seconds each. The scans were taken with mechanical vibration assisted electrospray using a horn configuration similar to that shown in FIG. 5 with a horn end piece configuration as shown in FIG. 6. The horn was operated at a vibrational frequency of approximately 170 KHz and the liquid flow rate was 4.4 ul/min. No consistent spectra of Cytochrome C could be obtained with this solution when ES dispersion was used without assistance by mechanical vibration. Good quality spectra were obtained only when ES was assisted by mechanical vibration.

## Claims

1. Apparatus for the production of ions from a liquid sample for analysis of said ions, comprising:
a tube member (7, 59, 91, 104, 110, 120, 140, 161, 196) having an exit end (81, 92, 109, 116, 130, 147, 171, 201), said tube member (7, 59, 91, 104, 110, 120, 140, 161, 196) having a channel of small diameter at said exit end (81, 92, 109, 116, 130, 147, 171, 201), said exit end (81, 92, 109, 116, 130, 147, 171, 201) serving as the tip of said tube member (7, 59, 91, 104, 110, 120, 140, 161, 196);
means for subjecting said liquid sample to an electrostatic field at the exit end (81, 92, 109, 116, 130, 147, 171, 201) of said tube member (7, 59, 91, 104, 110, 120, 140, 161, 196);
a counter electrode (8) located at a distance from said exit end (81, 92, 109, 116, 130, 147, 171, 201), an electrical potential being maintained at said exit end relative to said counter electrode (8); and
analysing means (19) for analysing said ions,
characterised in that the apparatus further comprises
means (32,141,160,180) for subjecting said liquid sample to mechanical vibration at the exit end (81, 92, 109, 116, 130, 147, 171, 201), of the tube member (7, 59, 91, 104, 110, 120, 140, 161, 196), wherein said means for subjecting said liquid sample to an electrostatic field and said means for subjecting said liquid sample to mechanical vibration are capable of being operated concurrently, such that the electrostatic field and mechanical vibration are applied simultaneously to said exit end, to form charged droplets of said liquid sample at said exit end and induce the emission of ions from said charged droplets.

2. Apparatus according to claim 1, further comprising separation means (211, 212) to separate component species in an initial sample.

3. Apparatus according to claim 2, wherein said separation means comprises a liquid chromatograph (211).

4. Apparatus according to claim 2, wherein said separation means comprises an electrophoretic separation system (212).

5. Apparatus according to claim 1, wherein said means (32, 141, 160, 180) for providing said mechanical vibration is a transducer means.

6. Apparatus according to claim 5, wherein said transducer means (141, 160) is directly in contact with said tube member (140, 161), so that the vibration of said transducer means (141, 160) is directly imparted to said tube member (140, 161), said tube member (140, 161) imparting vibration to said liquid sample as said liquid sample exits from the exit end (147, 171) of said tube member (140, 161).

7. Apparatus according to claim 5, wherein said transducer means (180) is directly in contact with said liquid sample so that the vibration of said transducer means (180) is directly imparted to said liquid sample, which liquid sample vibrates at said exit end (201) of said tube member (196).

8. Apparatus according to claim 5, wherein said transducer means (32) is coupled to a tuned horn (30), said tuned horn (30) comprising a tapered body whose cross sectional area at one end is substantially smaller than the cross sectional area at its other end, so that the amplitude of vibration at the end of said tuned horn (30) of smaller cross sectional area (40) is substantially larger than the amplitude of vibration applied to the end of said tuned horn (30) of larger cross sectional area (39).

9. Apparatus according to claim 1, wherein said tube member is housed in a tuned horn (30), said tuned horn (30) comprising a body whose cross sectional area at one end is substantially smaller than the cross sectional area at its other end, so that the amplitude of vibration at the end of said tuned horn (30) of smaller cross sectional area (40) is substantially larger than the amplitude of vibration applied to the end of said tuned horn (30) of larger cross sectional area (39).

10. Apparatus according to claim 8, wherein said tuned horn (30) comprises an end piece (38, 90, 100, 111, 121) to which said tube member (7, 59, 91, 104, 110 120) is attached.

11. Apparatus according to claim 10, wherein said end piece (38, 90, 100, 111, 121) is removable from said tuned horn (30).

12. Apparatus according to claim 11, wherein said tube member (104) is separably attached to said end piece (100) with a nut and ferrule means (102, 103).

13. Apparatus according to claim 11, wherein said tube member (110) is separably attached to said end piece (111) with a collet and nut means (112, 113), said collet means (112) being an integral part of said end piece (111).

14. Apparatus according to claim 11, wherein a continuous channel (72) is formed between said exit end (81) of said tube member (59) back through an open bore in said tuned horn (30), and extending back beyond said tuned horn (30) in a direction opposite to said exit end (81).

15. Apparatus according to claim 8, wherein a case (31) surrounds said tuned horn (30) and extends to near said exit end of said tube member (7, 59).

16. Apparatus according to claim 15, wherein said case comprises a gap (65) between said tuned horn (30) and said case (31) serving as a gas flow channel with gas entering the back of said case (31), flowing over said tuned horn (30), and exiting concentrically near said exit end of said tube member (7, 59), said case (31) making no contact with the vibrating exit end of said tube member (7, 59).

17. Apparatus according to claim 1, wherein said tip of said tube member has a sufficiently small radius of curvature so as to provide an intense electrostatic field at the tip of said tube member when an electrical potential is applied to said tube member.

18. Apparatus according to claim 1, further comprising a bath gas (14) maintained at a substantial fraction of normal atmospheric pressure at sea level for evaporating solvent from said charged liquid droplets to produce said ions.

19. Apparatus according to claim 1, wherein said tube member further comprises a first tubular conduit (59) with a small diameter exit end (81) through which said liquid sample solution is introduced from said source and delivered to a desired location in said apparatus, and,
a second tubular conduit (58) having a bore, through which bore said first tubular conduit (59) extends with means to adjust the relative positions of said first and second tubular conduits' exit ends.

20. Apparatus according to claim 19, further comprising a mechanically vibrating transducer (32) coupled to said first tubular conduit (59) so that said exit end (81) of said first tubular conduit (59) can be made to vibrate while solution is flowing through it and while it is being maintained at a high potential relative to said neighbouring surface, the combination of said vibration and electric field at said first tubular conduit's exit end serving to disperse said emerging liquid sample into said bath gas (14) as small highly charged droplets which evaporate in said bath gas (14) producing free molecular ions from solute molecules in said sample solution.

21. Apparatus according to claim 1, wherein said analysing means (19) comprises a vacuum system (17, 18);
and a metal channel (10), said bath gas (14) containing said charged droplets and said ions enters the vacuum system (17, 18) through the metal channel (10), the metal channel (10) being sufficiently long and sufficiently hot to evaporate said droplets entering the vacuum systems (17, 18).

22. Apparatus according to claim 1, wherein said analysing means (19) comprises a mass spectrometer.

23. Apparatus according to claim 1, wherein said means for providing said mechanical vibration vibrates said tip end (81, 92, 109, 116, 130, 147, 171, 201) of said tube member (7, 59, 91, 104, 110, 120, 140, 161, 196).

24. Apparatus according to claim 1, further comprising means to adjust said mechanical vibration to aid the process of formation of said charged droplets.

25. Apparatus according to claim 24, wherein said means to adjust comprises means to adjust the amplitude or frequency of said mechanical vibration.

26. Apparatus according to claim 23, wherein said means for providing said mechanical vibration is a transducer means (141, 160) connected to said tube member (140, 161) to apply mechanical vibration to said tube member (140, 161).

27. Apparatus according to claim 1, wherein said tube member (59) comprises at least one annular passage (72) in addition to said channel.

28. Apparatus according to claim 7, further comprising means to pass a sheath fluid (16) through said at least one annular passage (72).

29. Apparatus according to claim 28, wherein liquid flows from said tip (81) of said tube member (59), further comprising means (53, 54) to layer said liquid flow emerging from said tip of said tube member (59) so that said sheath fluid (16) and said liquid sample merge as said sheath fluid (16) and said liquid sample emerge from said tip (81) of said tube member (59).

30. Apparatus according to claim 27, wherein said tube member (59) comprises at least an outermost and at least one inner annular passage (72, 71) around said channel, wherein sheath fluid (16) flows in the outermost annular passage (72) of said tube member and said sheath fluid (16) in said outermost annular passage (72) is gaseous.

31. Apparatus according to claim 30, further comprising means to cool said tuned horn (30) using said gaseous sheath fluid (16).

32. A method for production of ions from a liquid sample for analysis of said ions, comprising:
providing a tube member (7, 59, 91, 104, 110, 120, 140, 161, 196) having an exit end (81, 92, 109, 116, 130, 147, 171, 201), said tube member (7, 59, 91, 104, 110, 120, 140, 161, 196) having a channel of small diameter at said exit end (81, 92, 109, 116, 130, 147, 171, 201), said exit end (81, 92, 109, 116, 130, 147, 171, 201) serving as the tip of said tube member (7, 59, 91, 104, 110, 120, 140, 161, 196);
passing a liquid sample through said tube member and out of said exit end (81, 92, 109, 116, 130, 147, 171, 201); and
maintaining said tube member (7, 59, 91, 104, 110, 120, 140, 161, 196) at an electrical potential at said exit end (81, 92, 109, 116, 130, 147, 171, 201) relative to a counter electrode (8) located at a distance from said exit end (81, 92, 109, 116, 130, 147, 171, 201);
characterised by
simultaneously subjecting said liquid sample to both an electrostatic field and mechanical vibration at said exit end (81, 92, 109, 116, 130, 147, 171, 201) to form charged droplets of said liquid sample at said exit end and to induce the emission of ions from said charged droplets.

## Patentansprüche

1. Vorrichtung zur Erzeugung von Ionen aus einer Flüssigkeitsprobe zur Analyse der Ionen, wobei die Vorrichtung aufweist:
ein Röhrenelement (7, 59, 91, 104, 110, 120, 140, 161, 196) mit einem Austrittsende (81, 92, 109, 116, 130, 147, 171, 201), wobei das Röhrenelement (7, 59, 91, 104, 110, 120, 140, 161, 196) an dem Austrittsende (81, 92, 109, 116, 130, 147, 171, 201) einen Kanal von kleinem Durchmesser aufweist, wobei das Austrittsende (81, 92, 109, 116, 130, 147, 171, 201) als Spitze des Röhrenelements (7, 59, 91, 104, 110, 120, 140, 161, 196) dient;
eine Einrichtung zum Anlegen eines elektrostatischen Feldes an die Flüssigkeitsprobe am Austrittsende (81, 92, 109, 116, 130, 147, 171, 201) des Röhrenelements (7, 59, 91, 104, 110, 120, 140, 161, 196);
eine Gegenelektrode (8) die in einem Abstand von dem Austrittsende (81, 92, 109, 116, 130, 147, 171, 201) angeordnet ist, wobei an dem Austrittsende ein elektrisches Potential bezüglich der Gegenelektrode (8) aufrechterhalten wird; und
eine Analyseneinrichtung (19) zum Analysieren der Ionen,
dadurch gekennzeichnet, daß die Vorrichtung ferner aufweist:
eine Einrichtung (32, 141, 160, 180) zum Anregen einer mechanischen Vibration der Flüssigkeitsprobe am Austrittsende (81, 92, 109, 116, 130, 147, 171, 201) des Röhrenelements (7, 59, 91, 104, 110, 120, 140, 161, 196), wobei die Einrichtung zum Anlegen eines elektrostatischen Feldes an die Flüssigkeitsprobe und die Einrichtung zum Anregen einer mechanischen Vibration der Flüssigkeitsprobe gleichzeitig betrieben werden können, so daß das elektrostatische Feld und die mechanische Vibration gleichzeitig an das Austrittsende angelegt werden, um an dem Austrittsende geladene Tröpfchen der Flüssigkeitsprobe zu bilden und die Emission von Ionen aus den geladenen Tröpfchen auszulösen.

2. Vorrichtung nach Anspruch 1, die ferner eine Trenneinrichtung (211, 212) zum Trennen von Komponentenarten in einer Ausgangsprobe aufweist.

3. Vorrichtung nach Anspruch 2, wobei die Trenneinrichtung einen Flüssigkeitschromatographen (211) aufweist.

4. Vorrichtung nach Anspruch 2, wobei die Trenneinrichtung ein elektrophoretisches Trennungssystem (212) aufweist.

5. Vorrichtung nach Anspruch 1, wobei die Einrichtung (32, 141, 160, 180) zum Anregen einer mechanischen Vibration eine Wandlereinrichtung ist.

6. Vorrichtung nach Anspruch 5, wobei sich die Wandlereinrichtung (141, 160) in direktem Kontakt mit dem Röhrenelement (140, 161) befindet, so daß die Vibration der Wandlereinrichtung (141, 160) direkt auf das Röhrenelement (140, 161) übertragen wird, wobei das Röhrenelement (140, 161) die Vibration auf die Flüssigkeitsprobe überträgt, während die Flüssigkeitsprobe aus dem Austrittsende (147, 171) des Röhrenelements (140, 161) austritt.

7. Vorrichtung nach Anspruch 5, wobei sich die Wandlereinrichtung (180) in direktem Kontakt mit der Flüssigkeitsprobe befindet, so daß die Vibration der Wandlereinrichtung (180) direkt auf die Flüssigkeitsprobe übertragen wird, wobei die Flüssigkeitsprobe am Austrittsende (201) des Röhrenelements (196) vibriert.

8. Vorrichtung nach Anspruch 5, wobei die Wandlereinrichtung (32) mit einem abgestimmten Horn bzw. Trichter (30) gekoppelt ist, wobei das abgestimmte Horn (30) einen sich verjüngenden Körper aufweist, dessen Querschnittsfläche an einem Ende wesentlich kleiner ist als die Querschnittsfläche an seinem anderen Ende, so daß die Vibrationsamplitude an dem Ende des abgestimmten Horns (30) mit kleinerer Querschnittsfläche (40) wesentlich größer ist als die Vibrationsamplitude, die an dem Ende des abgestimmten Horns (30) mit größerer Querschnittsfläche (39) anliegt.

9. Vorrichtung nach Anspruch 1, wobei das Röhrenelement in einem abgestimmten Horn (30) untergebracht ist, wobei das abgestimmte Horn (30) einen Körper aufweist, dessen Querschnittsfläche an einem Ende wesentlich kleiner ist als die Querschnittsfläche an seinem anderen Ende, so daß die Vibrationsamplitude an dem Ende des abgestimmten Horns (30) mit kleinerer Querschnittsfläche (40) wesentlich größer ist als die Vibrationsamplitude, die an dem Ende des abgestimmten Horns (30) mit größerer Querschnittsfläche (39) anliegt.

10. Vorrichtung nach Anspruch 8, wobei das abgestimmte Horn (30) ein Endstück (38, 90, 100, 111, 121) aufweist, an dem das Röhrenelement (7, 59, 91, 104, 110, 120) befestigt ist.

11. Vorrichtung nach Anspruch 10, wobei das Endstück (38, 90, 100, 111, 121) von dem abgestimmten Horn (30) abnehmbar ist.

12. Vorrichtung nach Anspruch 11, wobei das Röhrenelement (104) mit einer Mutter-Endring-Einrichtung (102, 103) lösbar an dem Endstück (100) befestigt ist.

13. Vorrichtung nach Anspruch 11, wobei das Röhrenelement (110) mit einer Klemmring-Mutter-Einrichtung (112, 113) lösbar an dem Endstück (111) befestigt ist, wobei die Klemmringeinrichtung (112) einen integralen Teil des Endstücks (111) bildet.

14. Vorrichtung nach Anspruch 11, wobei von dem Austrittsende (81) des Röhrenelements (59) nach hinten durch eine offene Bohrung in dem abgestimmten Horn (30) ein durchgehender Kanal (72) ausgebildet ist und sich nach hinten in einer zum Austrittsende (81) entgegengesetzten Richtung über das abgestimmte Horn (30) hinaus erstreckt.

15. Vorrichtung nach Anspruch 8, wobei ein Gehäuse (31) das abgestimmte Horn (30) umgibt und sich bis in die Nähe des Austrittsendes des Röhrenelements (7, 59) erstreckt.

16. Vorrichtung nach Anspruch 15, wobei das Gehäuse einen Zwischenraum (65) zwischen dem abgestimmten Horn (30) und dem Gehäuse (31) aufweist, der als Gasdurchflußkanal dient, wobei Gas an der Rückseite des Gehäuses (31) eintritt, über das abgestimmte Horn (30) fließt und in der Nähe des Austrittsendes des Röhrenelements (7, 59) konzentrisch austritt, wobei das Gehäuse (31) nicht mit dem vibrierenden Austrittsende des Röhrenelements (7, 59) in Kontakt kommt.

17. Vorrichtung nach Anspruch 1, wobei die Spitze des Röhrenelements einen ausreichend kleinen Krümmungsradius aufweist, um beim Anlegen eines elektrischen Potentials an das Röhrenelement an der Spitze des Röhrenelements ein starkes elektrostatisches Feld zu erzeugen.

18. Vorrichtung nach Anspruch 1, die ferner ein Badgas (14) aufweist, das auf einem beträchtlichen Bruchteil des normalen Atmosphärendrucks auf Meeresniveau gehalten wird, um zur Erzeugung der Ionen Lösungsmittel aus den geladenen Flüssigkeitströpfchen zu verdampfen.

19. Vorrichtung nach Anspruch 1, wobei das Röhrenelement ferner aufweist: einen ersten röhrenförmigen Kanal (59) mit einem Austrittsende (81) von kleinem Durchmesser, durch den die Flüssigkeitsprobenlösung aus der Quelle eingebracht und an eine gewünschte Stelle in der Vorrichtung abgegeben wird, und
einen zweiten röhrenförmigen Kanal (58) mit einer Bohrung, durch welche der erste röhrenförmige Kanal (59) hindurchgeht, mit einer Einrichtung zum Einstellen der relativen Positionen der Austrittsenden des ersten und des zweiten röhrenförmigen Kanals.

20. Vorrichtung nach Anspruch 19, die ferner einen mechanisch vibrierenden Wandler (32) aufweist, der mit dem ersten röhrenförmigen Kanal (59) gekoppelt ist, so daß das Austrittsende (81) des ersten röhrenförmigen Kanals (59) beim Durchfluß von Lösung in Vibration versetzt werden kann, während es bezüglich der benachbarten Oberfläche auf einem hohen Potential gehalten wird, wobei die Kombination von Vibration und elektrischem Feld am Austrittsende des ersten röhrenförmigen Kanals dazu dient, die austretende Flüssigkeitsprobe in dem Badgas (14) in Form von kleinen, hoch aufgeladenen Tröpfchen zu dispergieren, die in dem Badgas (14) verdampfen und aus Molekülen des gelösten Stoffs in der Probenlösung freie Molekül ionen erzeugen.

21. Vorrichtung nach Anspruch 1, wobei die Analyseneinrichtung (19) aufweist: ein Vakuumsystem (17, 18);
und einen Metallkanal (10), wobei das Badgas (14), das die geladenen Tröpfchen und die Ionen enthält, durch den Metallkanal (10) in das Vakuumsystem (17, 18) eintritt, wobei der Metallkanal (10) ausreichend lang und ausreichend heiß ist, um die in das Vakuumsystem (17, 18) eintretenden Tröpfchen zu verdampfen.

22. Vorrichtung nach Anspruch 1, wobei die Analyseneinrichtung (19) ein Massenspektrometer aufweist.

23. Vorrichtung nach Anspruch 1, wobei die Einrichtung zum Anregen der mechanischen Vibration das Spitzenende (81, 92, 109, 116, 130, 147, 171, 201) des Röhrenelements (7, 59, 91, 104, 110, 120, 140, 161, 196) in Vibration versetzt.

24. Vorrichtung nach Anspruch 1, die ferner eine Einrichtung zum Einstellen der mechanischen Vibration aufweist, um den Bildungsprozeß der geladenen Tröpfchen zu unterstützen.

25. Vorrichtung nach Anspruch 24, wobei die Einstelleinrichtung eine Einrichtung zum Einstellen der Amplitude oder der Frequenz der mechanischen Vibration aufweist.

26. Vorrichtung nach Anspruch 23, wobei die Einrichtung zum Anregen der mechanischen Vibration eine mit dem Röhrenelement (140, 161) verbundene Wandlereinrichtung (141, 160) ist, um das Röhrenelement (140, 161) in mechanische Vibration zu versetzen.

27. Vorrichtung nach Anspruch 1, wobei das Röhrenelement (59) außer dem Kanal mindestens einen ringförmigen Kanal bzw. Durchlaß (72) aufweist.

28. Vorrichtung nach Anspruch 7, die ferner eine Einrichtung zum Durchleiten eines Hüll- bzw. Mantelfluids (16) durch den mindestens einen ringförmigen Durchlaß (72) aufweist.

29. Vorrichtung nach Anspruch 28, wobei Flüssigkeit aus der Spitze (81) des Röhrenelements (59) ausfließt, und die ferner Einrichtungen (53, 54) zum Schichten des aus der Spitze des Röhrenelements (59) austretenden Flüssigkeitsstroms aufweist, so daß das Mantelfluid (16) und die Flüssigkeitsprobe beim Austritt des Mantelfluids (16) und der Flüssigkeitsprobe aus der Spitze (81) des Röhrenelements (59) zusammenfließen.

30. Vorrichtung nach Anspruch 27, wobei das Röhrenelement (59) mindestens einen äußersten und mindestens einen inneren ringförmigen Durchlaß (72, 71) um den Kanal herum aufweist, wobei das Mantel fluid (16) in dem äußersten ringförmigen Durchlaß (72) des Röhrenelements fließt, und wobei das Mantelfluid (16) in dem äußersten ringförmigen Durchlaß (72) gasförmig ist.

31. Vorrichtung nach Anspruch 30, die ferner eine Einrichtung zum Kühlen des abgestimmten Horns (30) unter Verwendung des gasförmigen Mantelfluids (16) aufweist.

32. Verfahren zum Erzeugen von Ionen aus einer Flüssigkeitsprobe zur Analyse der Ionen, mit den folgenden Schritten:
Bereitstellen eines Röhrenelements (7, 59, 91, 104, 110, 120, 140, 161, 196) mit einem Austrittsende (81, 92, 109, 116, 130, 147, 171, 201), wobei das Röhrenelement (7, 59, 91, 104, 110, 120, 140, 161, 196) an dem Austrittsende (81, 92, 109, 116, 130, 147, 171, 201) einen Kanal von kleinem Durchmesser aufweist, wobei das Austrittsende (81, 92, 109, 116, 130, 147, 171, 201) als Spitze des Röhrenelements (7, 59, 91, 104, 110, 120, 140, 161, 196) dient;
Durchleiten einer Flüssigkeitsprobe durch das Röhrenelement und aus dem Austrittsende (81, 92, 109, 116, 130, 147, 171, 201) heraus; und
Halten des Röhrenelements (7, 59, 91, 104, 110, 120, 140, 161, 196) auf einem elektrischen Potential am Austrittsende (81, 92, 109, 116, 130, 147, 171, 201) bezüglich einer Gegenelektrode (8), die in einem Abstand vom Austrittsende (81, 92, 109, 116, 130, 147, 171, 201) angeordnet ist;
dadurch gekennzeichnet, daß die Flüssigkeitsprobe am Austrittsende (81, 92, 109, 116, 130, 147, 171, 201) gleichzeitig einem elektrostatischen Feld und einer mechanischen Vibration ausgesetzt wird, um an dem Austrittsende geladene Tröpfchen der Flüssigkeitsprobe zu bilden und die Emission von Ionen aus den geladenen Tröpfchen auszulösen.

## Revendications

1. Appareil pour la production d'ions à partir d'un échantillon liquide pour l'analyse desdits ions, comprenant:
un élément tubulaire (7, 59, 91, 104, 110, 120, 140, 161, 196) ayant une extrémité de sortie (81, 92, 109, 116, 130, 147, 171, 201), ledit élément tubulaire (7, 59, 91, 104, 110, 120, 140, 161, 196), ayant un canal de faible diamètre au niveau de ladite extrémité de sortie (81, 92, 109, 116, 130, 147, 171, 201), ladite extrémité de sortie (81, 92, 109, 116, 130, 147, 171, 201) servant de pointe dudit élément tubulaire (7, 59, 91. 104, 110, 120, 140, 161, 196);
un moyen pour soumettre ledit échantillon liquide à un champ électrostatique au niveau de l'extrémité de sortie (81, 92, 109, 116, 130, 147, 171, 201) dudit élément tubulaire (7, 59, 91, 104, 110, 120, 140, 161, 196):
une contre-électrode (8) située à distance de ladite extrémité de sortie (81, 92, 109, 116, 130, 147, 171, 201), un potentiel électrique étant maintenu au niveau de ladite extrémité de sortie par rapport à ladite contre-électrode (8); et
un moyen d'analyse (19) pour analyser lesdits ions,
caractérisé en ce que l'appareil comprend en outre
un moyen (32, 141, 160, 180) pour soumettre ledit échantillon liquide à une vibration mécanique au niveau de l'extrémité de sortie (81, 92, 109, 116, 130, 147, 171, 201), de l'élément tubulaire (7, 59, 91, 104, 110, 120, 140, 161, 196), dans lequel ledit moyen pour soumettre ledit échantillon liquide à un champ électrostatique et ledit moyen pour soumettre ledit échantillon liquide à une vibration mécanique sont capable d'être actionnés en parallèle, de façon à ce que le champ électrostatique et la vibration mécanique soient appliqués simultanément à ladite extrémité de sortie, afin de produire des gouttelettes chargées à partir dudit échantillon liquide au niveau de ladite extrémité de sortie et d'induire l'émission d'ions à partir desdites gouttelettes chargées.

2. Appareil selon la revendication 1, comprenant en outre un moyen de séparation (211, 212) pour séparer des espèces constitutives dans un échantillon initial.

3. Appareil selon la revendication 2, dans lequel ledit moyen de séparation comprend un appareil de chromatographie liquide (211).

4. Appareil selon la revendication 2, dans lequel ledit moyen de séparation comprend un système de séparation électrophorétique (212).

5. Appareil selon la revendication 1, dans lequel ledit moyen (32, 141, 160, 180) fournissant ladite vibration mécanique est un moyen de transducteur.

6. Appareil selon la revendication 5, dans lequel ledit moyen de transducteur (141, 160) est directement en contact avec ledit élément tubulaire (140, 161), de façon à ce que la vibration dudit moyen de transducteur (141, 160) soit directement transmise au dit élément tubulaire (140, 161), ledit élément tubulaire (140, 161) transmettant une vibration au dit échantillon liquide au moment où ledit échantillon liquide sort de l'extrémité de sortie (147, 171) dudit élément tubulaire (140, 161).

7. Appareil selon la revendication 5, dans lequel ledit moyen de transducteur (180) est directement en contact avec ledit échantillon liquide de façon à ce que la vibration dudit moyen de transducteur (180) soit directement transmise audit échantillon liquide, cet échantillon liquide étant en vibration au niveau de ladite extrémité de sortie (201) dudit élément tubulaire (196).

8. Appareil selon la revendication 5, dans lequel ledit moyen de transducteur (32) est accouplé à un cornet accordé (30), ledit cornet accordé (30) comprenant un corps effilé dont la surface de la section transversale au niveau d'une extrémité est significativement plus petite que la surface de la section transversale au niveau de son autre extrémité, de façon à ce que l'amplitude de vibration au niveau de l'extrémité à surface de la section transversale plus petite (40) dudit cornet accordé (30) est significativement plus grande que l'amplitude de vibration appliquée à l'extrémité à surface de la section transversale plus grande (39) dudit cornet accordé (30).

9. Appareil selon la revendication 1, dans lequel ledit élément tubulaire est logé dans un cornet accordé (30), ledit cornet accordé (30) comprenant un corps dont la surface de la section transversale au niveau d'une extrémité est significativement plus petite que la surface de la section transversale au niveau de son autre extrémité, de sorte que l'amplitude de vibration au niveau de l'extrémité à surface de la section transversale plus petite (40) dudit cornet accordé (30) soit significativement plus grande que l'amplitude de vibration appliquée à l'extrémité à surface de la section transversale plus grande (39) dudit cornet accordé (30).

10. Appareil selon la revendication 8, dans lequel ledit cornet accordé (30) comprend une pièce terminale (38, 90, 100, 111, 121) à laquelle est attaché ledit élément tubulaire (7, 59, 91, 104, 110, 120).

11. Appareil selon la revendication 10, dans lequel ladite pièce terminale (38, 90, 100, 111, 121) est amovible à partir dudit cornet accordé (30).

12. Appareil selon la revendication 11, dans lequel ledit élément tubulaire (104) est attaché de manière séparable à ladite pièce terminale (100) grâce à un moyen d'écrou et de virole (102, 103).

13. Appareil selon la revendication 11, dans lequel ledit élément tubulaire (110) est attaché de manière séparable à ladite pièce terminale (111) grâce à un moyen de collier et d'écrou (112, 113), ledit moyen de collier (112) étant une partie intégrale de ladite pièce terminale (111).

14. Appareil selon la revendication 11, dans lequel un canal continu (72) est formé entre ladite extrémité de sortie (81) dudit élément tubulaire (59) en direction arrière à travers un alésage ouvert dans ledit cornet accordé (30), et s'étendant en direction arrière au delà dudit cornet accordé (30), dans une direction opposée à ladite extrémité de sortie (81).

15. Appareil selon la revendication 8, dans lequel un boîtier (31) entoure ledit cornet accordé (30) et s'étend jusqu'à approcher ladite extrémité de sortie dudit élément tubulaire (7, 59).

16. Appareil selon la revendication 15, dans lequel ledit boîtier comprend un interstice (65) entre ledit cornet accordé (30) et ledit boîtier (31) servant de canal pour un flux gazeux, le gaz entrant du côté arrière dudit boîtier (30), s'écoulant au dessus dudit cornet accordé (30), et sortant de manière concentrique près de ladite extrémité de sortie dudit élément tubulaire (7, 59), ledit boîtier (31) n'entrant pas en contact avec l'extrémité de sortie en vibration dudit élément tubulaire (7, 59).

17. Appareil selon la revendication 1, dans lequel ladite pointe dudit élément tubulaire à un rayon de courbure suffisamment petit, de sorte à assurer un champ électrostatique intense au niveau de la pointe dudit élément tubulaire lors de l'application d'un potentiel électrique audit élément tubulaire.

18. Appareil selon la revendication 1, comprenant en outre un bain gazeux (14) maintenu à une fraction appréciable de la pression atmosphérique normale au niveau de la mer afin d'évaporer le solvant à partir desdites gouttelettes liquides chargées pour produire lesdits ions.

19. Appareil selon la revendication 1, dans lequel ledit élément tubulaire comprend un premier conduit tubulaire (59) avec une extrémité de sortie (81) à faible diamètre à travers lequel ladite solution de l'échantillon liquide est introduit à partir de ladite source et délivré vers un endroit désiré dans ledit appareil, et
un second conduit tubulaire (58) ayant un alésage, à travers lequel ledit premier conduit tubulaire (59) s'étend avec des moyens pour ajuster la position relative des extrémités de sortie dudit premier et second conduit tubulaire.

20. Appareil selon la revendication 19, comprenant en outre un transducteur vibrant mécaniquement (32), couplé audit premier conduit tubulaire (59) de sorte que ladite extrémité de sortie (81) dudit premier conduit tubulaire (59) peut être mis en vibration pendant qu'une solution s'écoule à travers celle-ci et pendant qu'elle est maintenue à un potentiel élevé par rapport à ladite surface avoisinante, la combinaison de ladite vibration et dudit champ électrique au niveau de l'extrémité de sortie dudit premier conduit tubulaire servant à disperser ledit échantillon liquide émergeant dans ledit bain gazeux (14) en tant que petites gouttelettes hautement chargées, qui s'évaporent dans ledit bain gazeux (14) en produisant des ions moléculaires libres à partir de molécules dissoutes dans ladite solution échantillon.

21. Appareil selon la revendication 1, dans lequel ledit moyen d'analyse (19) comprend un système d'aspiration (17, 18); et
un canal métallique (10), ledit bain gazeux (14), contenant lesdites gouttelettes chargées et lesdits ions, rentre dans le système d'aspiration (17, 18) à travers le canal métallique (10), le canal métallique étant suffisamment long et suffisamment chaud pour évaporer lesdites gouttelettes rentrant dans le système d'aspiration (17, 18).

22. Appareil selon la revendication 1, dans lequel ledit moyen d'analyse (19) comprend un spectromètre de masse.

23. Appareil selon la revendication 1, dans lequel ledit moyen pour fournir une vibration mécanique met en vibration ladite extrémité de pointe (81, 92, 109, 116, 130, 147, 171, 201) dudit élément tubulaire (7, 59, 91, 104, 110, 120, 140, 161, 196).

24. Appareil selon la revendication 1, comprenant en outre un moyen pour ajuster ladite vibration mécanique pour supporter le procédé de formation desdites gouttelettes chargées.

25. Appareil selon la revendication 24, dans lequel ledit moyen pour ajuster comprend un moyen pour ajuster l'amplitude ou la fréquence de ladite vibration mécanique.

26. Appareil selon la revendication 23, dans lequel ledit moyen pour fournir ladite vibration mécanique est un moyen de transducteur (141, 160) relié audit élément tubulaire (140, 161) pour appliquer une vibration mécanique audit élément tubulaire (140, 161).

27. Appareil selon la revendication 1, dans lequel ledit élément tubulaire (59) comprend au moins un passage annulaire (72) en plus dudit canal.

28. Appareil selon la revendication 7, comprenant en outre un moyen pour passer un fluide de gaine (16) à travers ledit au moins un passage annulaire (72).

29. Appareil selon la revendication 28, dans lequel du liquide s'écoule de ladite pointe (81) dudit élément tubulaire (59), comprenant en outre un moyen (53, 54) pour disposer en couche ledit flux de liquide émergeant de ladite pointe dudit élément tubulaire (59) de sorte que le fluide de gaine (16) et ledit échantillon liquide se rejoignent au fur et à mesure que ledit fluide de gaine (16) et ledit échantillon liquide émergent de ladite pointe (81) dudit élément tubulaire (59).

30. Appareil selon la revendication 27, dans lequel ledit élément tubulaire (59) comprend au moins un passage annulaire le plus externe et au moins un passage annulaire interne (72, 71) autour dudit canal, où le fluide de gaine (16) s'écoule dans le passage annulaire le plus externe (72) dudit élément tubulaire et ledit fluide de gaine (16) dans ledit passage annulaire le plus externe (72) est gazeux.

31. Appareil selon la revendication 30, comprenant en outre un moyen pour refroidir ledit cornet accordé (30) en utilisant ledit fluide de gaine gazeux (16).

32. Procédé pour la production d'ions à partir d'un échantillon liquide pour l'analyse desdits ions, qui comprend les étapes consistant à:
mettre à disposition un élément tubulaire (7, 59, 91, 104, 110, 120, 140, 161, 196) ayant une extrémité de sortie (81, 92, 109, 116, 130, 147, 171, 201), ledit élément tubulaire (7, 59, 91, 104, 110, 120, 140, 161, 196) ayant un canal de faible diamètre au niveau de ladite extrémité de sortie (81, 92, 109, 116, 130, 147, 171, 201), ladite extrémité de sortie (81, 92, 109, 116, 130, 147, 171, 201) servant de pointe dudit élément tubulaire (7, 59, 91, 104, 110, 120, 140, 161, 196);
passer un échantillon liquide à travers ledit élément tubulaire et hors de ladite extrémité de sortie (81, 92, 109, 116, 130, 147, 171, 201); et
maintenir ledit élément tubulaire (7, 59, 91, 104, 110, 120, 140, 161, 196) à un potentiel électrique au niveau de ladite extrémité de sortie (81, 92, 109, 116, 130, 147, 171, 201) par rapport à une contre-électrode (8) située à distance de ladite extrémité de sortie (81, 92, 109, 116, 130, 147, 171, 201); caractérisé par l'étape consistant à:
soumettre simultanément ledit échantillon liquide à un champ électrostatique et à une vibration mécanique au niveau de ladite extrémité de sortie (81, 92, 109, 116, 130, 147, 171, 201) afin de produire des gouttelettes chargées à partir dudit échantillon liquide au niveau de ladite extrémité de sortie et d'induire l'émission d'ions à partir desdites gouttelettes chargées.
